(19) Europäisches Patentamt
European Patent Office
Office européen des brevets

(11) Veröffentlichungsnummer: **0 224 758**
**A2**

(12) **EUROPÄISCHE PATENTANMELDUNG**

(21) Anmeldenummer: 86115581.0

(22) Anmeldetag: 10.11.86

(51) Int. Cl.4 **A47J 27/00** , H05B 3/68

(30) Priorität: 05.12.85 DE 3542954

(43) Veröffentlichungstag der Anmeldung:
10.06.87 Patentblatt 87/24

(84) Benannte Vertragsstaaten:
AT BE CH DE ES FR GB GR IT LI LU NL SE

(71) Anmelder: Hakemann, Fritz
Barnstorfer Strasse 27
D-2849 Goldenstedt(DE)

(72) Erfinder: Hakemann, Fritz
Barnstorfer Strasse 27
D-2849 Goldenstedt(DE)

(74) Vertreter: Jabbusch, Wolfgang, Dr.
Elisabethstrasse 6
D-2900 Oldenburg(DE)

(54) Behälter zum Warmhalten von Speisen.

(57) Die Erfindung betrifft einen Behälter zum Warmhalten von Speisen, vorzugsweise einen in Kantinen- oder Ladentheken einbaubaren Behälter aus Chrom-Nickel-Stahl, insbesondere einen Behälter mit einem Außengefäß, einer das Außengefäß beheizenden Heizeinrichtung und mit einem in das Außengefäß einsetzbaren Einsatzgefäß zur Aufnahme der Speisen.

Um einen derartigen Behälter sicherer und gleichmäßiger beheizbar zu machen, ist als Heizeinrichtung ein an der Außenseite des Außengefäßes befindliches elektrisches Widerstandsheizelement vorgesehen. Vorzugsweise ist das Widerstandsheizelement eine an der Außenseite des Bodens des Außengefäßes angeordnete, an sich bekannte Elektro-Heizplatte, insbesondere mit einer Temperatursteuereinrichtung.

Fig.1

EP 0 224 758 A2

## Behälter zum Warmhalten von Speisen

Die Erfindung betrifft einen Behälter zum Warmhalten von Speisen, vorzugsweise in Kantinen-oder Ladentheken einbaubaren Behälter aus Chrom-Nickel-Stahl, insbesondere Behälter mit einem Außengefäß, einer das Außengefäß beheizenden Heizeinrichtung und mit einem in das Außengefäß einsetzbaren Einsatzgefäß zur Aufnahme der Speisen.

Behälter der obengenannten Gattung werden beispielsweise in Kantingen oder in Schnellimbissen, zum Beispiel direkt an der Essensausgabe, zum Warmhalten von Speisen eingesetzt. Ein solcher Behälter weist zumeist ein Außengefäß auf, das in der Regel fest mit einer Theke verbunden ist und in dieser Theke eingelassen ist. Zur Beheizung dieses Ausßengefäßes ist üblicherweise eine Heizschlange vorgesehen, die in Bodennähe im Innern des Außengefäßes verlegt ist. In das Außengefäß wird in der Regel so viel Wasser eingefüllt, daß das Wasser die Heizschlange bedeckt und das Wasser durch die Heizschlange erhitzt wird.

Die Speisen, die warmzuhalten sind, werden zumeist in der Küche in Einsatzgefäße eingefüllt, von denen jeweils ein oder mehrere Einsatzgefäße in ein Außengefäß eingesetzt werden können. Meist weisen die Einsatzgefäße an ihrem oberen Rand eine Krempe auf, so daß sie in einfacher Weise in das Außengefäß eingehängt werden können. Sind die Einsatzgefäße in das Außengefäß eingesetzt, so verdecken das oder die Einsatzgefäße die Öffnung des Außengefäßes, wobei Krempen der Einsatzgefäße eine gewisse Dichtfunktion ausüben, duch die ein schnelles Verdunsten des erhitzten Wassers aus dem Außengefäß verhindert wird. Durch das erhitzte Wasser und den sich bildenden Wasserdampf werden die Einsatzgefäße erwärmt, wodurch auch die im Innern des Einsatzgefäßes befindlichen Speisen warmgehalten werden. Wenn ein Einsatzgefäß geleert ist, kann es in einfacher Weise gegen ein aus der Küche nachgeliefertes, volles Einsatzgefäß ausgetauscht werden.

Da die Einsatzgefäße lose in die Außengefäße eingehängt sind, ist der Bereich zwischen der Wandung des Einsatzgefäßes und der Wandung des Außengefäßes nicht vollkommen abgedichtet, so daß trotz eventuell vorhandener Krempen der Einsatzgefäße ständig Wasser verdampft und aus dem Außengefäß verlorengeht. Eine Kontrolle des Wasserstandes im Außengefäß findet allenfalls dann statt, wenn ein leeres Einsatzgefäß gegen ein volles Einsatzgefäß ausgetauscht wird. Daher kann es passieren, daß der Wasserstand im Außengefäß soweit absinkt, daß die im Außengefäß befindliche Heizschlange nicht mehr bedeckt ist, ohne daß dies bemerkt wird. Dies führt zu einer Überhitzung der Heizschlange, so daß diese durchbrennen kann und dadurch irreparabel geschädigt wird.

Da die Heizschlange im Innern des Außengefäßes verläuft, die elektrischen Anschlüsse der Heizschlange sich aber außerhalb des Außengefäßes befinden, müssen in dem Außengefäß Durchführungen sein, durch die die Enden der Heizschlange nach außen durchgeführt sind. Diese Durchführungen müssen vollkommen abgedichtet sein, damit im Außengefäß befindliches Wasser nicht durch diese Durchführungen verlorengeht. Die Heizschlange ist daher im Bereich der Durchführungen meist mit dem Außengefäß fest verbunden, so daß ein Auswechseln einer durchgebrannten Heizschlange oft nicht möglich ist, sondern das gesamte Außengefäß ersetzt werden muß.

Der Erfindung liegt die Aufgabe zugrunde, einen Behälter der eingangs genannten Gattung so auszubilden, daß der Behälter sicherer und gleichmäßiger beheizbar ist.

Die Aufgabe ist erfindungsgemäß dadurch gelöst worden, daß als Heizeinrichtung ein an der Außenseite des Außengefäßes befindliches elektrisches Widerstandsheizelement vorgesehen ist.

Die Heizeinrichtung ist mit Vorteil außenseitig an dem Außengefäß angeordnet, so daß keine Durchführungen notwendig sind, für die die Wandung des Außengefäßes durchbrochen werden muß. Die Heizeinrichtung ist in einfacher Weise abnehmbar, so daß das Außengefäß leicht mit einer Heizeinrichtung ausgerüstet werden kann und eine beschädigte Heizeinrichtung zu Reparaturzwecken abgenommen oder ausgewechselt werden kann. Die Heizeinrichtung steht vorzugsweise großflächig mit der Wandung des Außengefäßes in Wärmekontakt, so daß die Wandung des Außengefäßes großflächig erwärmt wird, ohne daß es zu lokalen Überhitzungen kommt, die zu Beschädigungen oder Verwerfungen des Außengefäßes führen könnten. Zudem ist die Temperatur eines elektrischen Widerstandsheizelementes in einfacher Weise durch Stromregelung regelbar, so daß an dem Widerstandsheizelement eine Temperatur eingestellt werden kann, die selbst dann, wenn das Wasser aus dem Außengefäß verdampt ist, nicht zu einer Überhitzung der Heizplatte oder das Außengefäßes führt, die Beschädigungen dieser Bauelemente zur Folge haben könnte.

Vorzugsweise ist als Widerstandsheizelement eine an der Außenseite des Bodens des Außengefäßes angeordnete, an sich bekannte Elektro-Heizplatte vorgesehen. Mit Vorteil wird als Widerstandsheizelement eine Heizplatte verwendet, die für Elektroöfen in hoher Stückzahl gefertigt wird, so daß sie kostengünstig ist und ein umfangreicher Wartungsservice vorhanden ist.

Bei einer bevorzugten Ausbildung weist die Heizplatt eine Temperatursteuereinrichtung auf, so daß sich die Heizplatte, wenn die in der Temperatursteuereinrichtung eingestellte Temperatur erreicht ist von selbst ausstellt und bei Unterschreiten einer Minimaltemperatur wieder einschaltet. Als Heizplatte kann eine sogenannte Automatik-Heizplatte verwendet werden, die einen Wärmefühler aufweist, der zentral an der dem Außengefäß zugewandten Weite angeordnet ist. Eine Überhitzung des Außengefäßes wird durch die Temperatursteuereinrichtung in vorteilhafter Weise verhindert.

Als Werkstoff für die Wandung des Außengefäßes wird in der Regel Chrom-Nickel-Stahl verwendet, der ein relativ schlechter Wärmeleiter ist. Um eine Überhitzung der Wandung des Außengefäßes im Bereich der Heizplatte zu verhindern, die zu Verwerfungen des Außengefäßes führen könnte, und um eine gleichmäßige Verteilung der Wärme möglichst auf der gesamten Bodenfläche des Außengefäßes zu erreichen, ist nach einer Weiterbildung des Behälters an dem Boden des Außengefäßes außen eine Lage aus einem Werkstoff mit relativ hoher Wärmeleitzahl angeordnet und liegt die Heizplatte an der Lage mit wärmeleitendem Kontakt an. Über die Wärme leitende Lage verteilt sich die Wärme im gesamten Bodenbereich des Außengefäßes, so daß der Boden des Außengefäßes gleichmäßig erwärmt wird, ohne daß es zu lokalen Überhitzungen und Verwerfungen des Bodens kommt. Außerdem wird das im Außengefäß befindliche Wasser mit Hilfe der Wärme leitenden Lage effektiver erwärmt.

Die Wärme leitende Lage ist vorzugsweise eine leicht zu montierende Platte aus Aluminium. Aluminium ist ein relativ guter Wärmeleiter, kostengünstig und besitzt eine relativ niedrige Dichte, so daß die Platte nur ein geringes Eigengewicht aufweist und an dem Außengefäß befestigt werden kann, ohne daß sich das Außengefäß durch das Gewicht der Platte verformt. Zudem läßt sich Aluminium leicht verarbeiten und ausformen.

Die Platte weist bei einer bevorzugten Ausbildung Dehnungsfugen auf, die eine Ausdehnung der Platte bei Erhitzung ermöglichen, so daß es nicht zu Spannungen in der Platte kommt, die zu Beschädigungen der Platte führen könnten oder zumindest Verwerfungen der Platte verursachen könnten, so daß eine ganzflächige Anlage der Platte an dem Boden des Außengefäßes auch bei Erhitzung gegeben ist. Vorzugsweise sind als Dehnungsfugen Rillen vorgesehen, die in der dem Boden des Außengefäßes abgewandten Oberfläche der Platte angeordnet sind.

Die Platte ist vorzugsweise an dem Außengefäß befestigt, so daß das Außengefäß als kompakte Einheit in eine Theke oder ähnliches eingebaut werden kann. Um zu verhindern, daß bei der Ausdehnung der Platte unter Erhitzung die Befestigungselemente, mit denen die Platte an dem Außengefäß befestigt ist, Scherkräften ausgesetzt werden, ist die Platte mit Hilfe von Befestigungslementen an dem Boden des Außengefäßes befestigt, die in der Platte angeordnete Durchbrechungen mit Spiel durchgreifen. Durch den Spielraum zwischen der Platte und den Befestigungslementen kann sich die Platte ausdehnen, ohne die Befestigungselemente zu belasten.

Die Befestigungselemente sind vorzugsweise von dem Boden des Außengefäßes etwa senkrecht vorstehende Bolzen, wobei die Platte an jedem Bolzen mit wenigstens einem die dem jeweiligen Bolzen zugeordnete Durchbrechung an der dem Außengefäß abgewandten Seite überdeckenden, an dem freien Ende des Bolzens angesetzten Halteelement gehalten ist.

Die Bolzen sind vorzugsweise an dem Außengefäß angeschweißt, beispielsweise widerstandsgeschweißt. Die die Platte am Außengefäß haltenden Halteelemente können beispielsweise Umnietungen der Bolzen sein. Vorzugsweise weisen die Bolzen an ihrem freien Ende ein Gewinde auf, auf das als Halteelement jeweils eine Mutter aufgeschraubt werden kann, unter die zum besseren Halt der Platte ein Federring untergelegt ist, der die Platte unter Federspannung an den Boden des Außengefäßes andrückt. Durch Lösen der Muttern kann die Platte in einfacher Weise von dem Boden abgenommen werden.

Ein Ausführungsbeispiel, aus dem sich weitere erfinderische Merkmale ergeben, ist in der Zeichnung dargestellt. Es zeigen:

Fig. 1 einen Schnitt durch einen erfindungsgemäßen Behälter,

Fig. 2 eine Unteransicht des Behälters gemäß Fig. 1 und

Fig. 3 die mit III in Fig. 1 bezeichnete Einzelheit in vergrößerndem Maßstab.

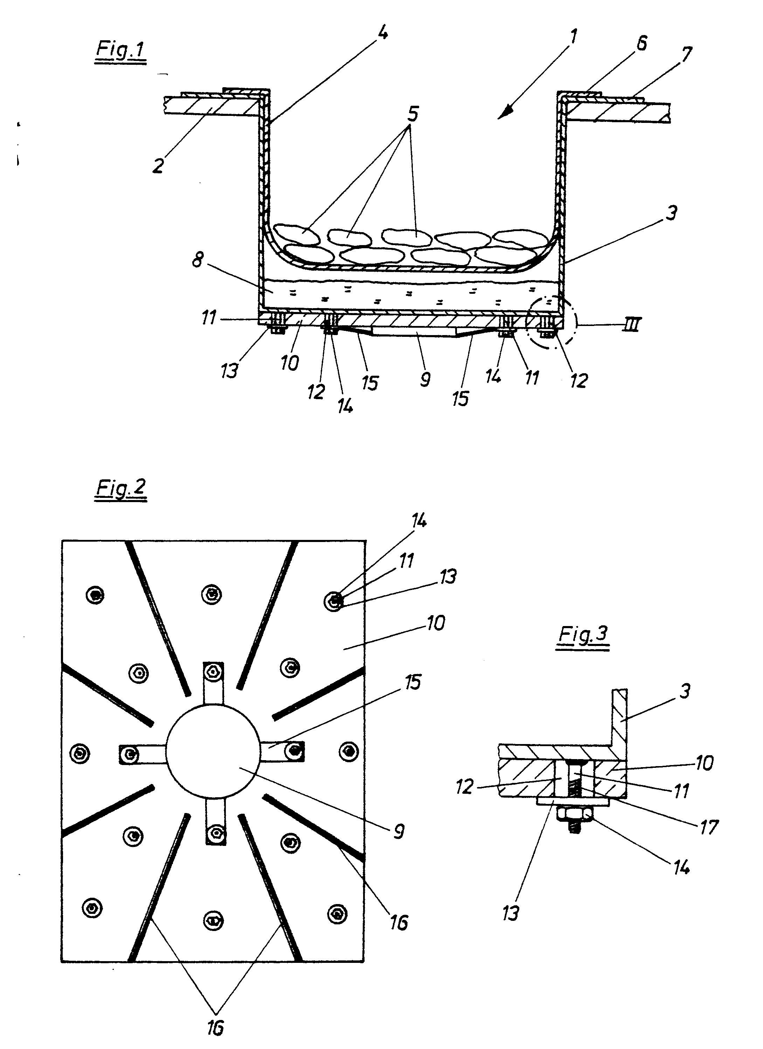

In Fig. 1 ist ein erfindungsgemäßer Behälter 1 im Schnitt dargestellt, der in eine Theke 2 eingebaut ist. Der Behälter 1 weist ein beheizbares Außengefäß 3 auf, das mit der Theke 2 verbunden ist und in die Theke 2 eingelassen ist. In das Außengefäß 3 ist ein Einsatzgefäß 4 eingesetzt, welches zur Aufnahme von warmzuhaltenden Speisen 5 dient. Das Einsatzgefäß 4 weist an seinem Öffnungsrand eine Krempe 6 auf, mit der es auf einer Krempe 7 des Außengefäßes 3 aufliegt und ist herausnehmbar in das Außengefäß eingehängt. Zwischen dem Boden des Einsatzgefäßes 4 und dem Boden des Außengefäßes 3 ist in das Außengefäß 3 Wasser 8 eingefüllt, das über das Außengefäß 3 erwärmt werden kann und seinerseits durch Wasserdampf das Einsatzgefäß 4 und die darin befindlichen Speisen 5 erwärmt.

Die Beheizung des Außengefäßes 3 erfolgt mit einer außenseitig am Boden des Außengefäßes 3 angeordneten elektrischen Heizplatte 9. Zwischen der Heizplatte 9 und dem Boden des Außengefäßes 3 ist eine wärmeleitende Platte 10 angeordnet, die ganzflächig an dem Boden des Außengefäßes anliegt und, die gesamte Fläche des Bodens des Außengefäßes 3 abdeckend, die von der Heizplatte 9 abgegebene Wärme auf den Boden des Außengefäßes 3 verteilt. An der Außenseite des Bodens des Außengefäßes 3 sind etwa senkrecht vom Boden abstehende Bolzen 11 angeordnet, die in der Platte 10 angeordnete Durchbrechungen 12 mit Spiel durchgreifen. Durch einen eine Durchbrechung 12 abdeckenden Federring 13 und eine Mutter 14, die als Halteelement dienen, ist die Platte 10 jeweils an jedem der Bolzen 11 gehalten. Die Heizplatte 9 ist mit Hilfe von Laschen 15 ebenfalls an ihr benachbarten Bolzen 11 gehalten.

In Fig. 2 ist eine Unteransicht des Behälters gemäß Fig. 1 dargestellt. Gleiche Bauelemente sind mit den gleichen Bezugszahlen bezeichnet wie in Fig. 1.

In Fig. 2 ist zu erkennen, daß die Platte 10 strahlförmig von dem Ort der Heizplatte 9 nach außen verlaufende Dehnungsfugen 16 aufweist, die als Rillen ausgebildet sind, die in die dem Außengefäß 3 abgewandte Oberfläche der Platte 10 eingebracht sind.

Fig. 3 zeigt die in Fig. 1 mit III bezeichnete Einzelheit in vergrößerndem Maßstab. Gleiche Bauelemente sind mit den gleichen Bezugszahlen bezeichnet wie in Fig. 1.

Fig. 3 zeigt einen Bereich der Platte 10, in dem eine Durchbrechung 12 angeordnet ist. Die Durchbrechung 12 wird von einem Bolzen 11 mit Spiel durchgriffen, der mit einem Ende an dem Außengefäß 3 angeschweißt ist. An seinem freien Ende weist der Bolzen 11 ein Gewinde 17 auf, das aus der Durchbrechung 12 nach außen vorragt und auf das eine Mutter 14 aufgeschraubt ist. Zwischen der Mutter 14 und der Platte 10 ist ein Federring 13 untergelegt, der die Durchbrechung 12 abdeckt und die Platte 10 unter Federdruck an das Außengefäß 3 andrückt.

Die Platte 10 kann sich unter Erhitzung aufgrund ihrer Dehnungsfugen 16 gleichmäßig ausdehnen, wobei der Spielraum zwischen den Bolzen 11 und der Platte 10 dafür sorgt, daß bei Ausdehnung der Platte 10 die Bolzen 11 nicht durch Scherkräft belastet werden.

**Ansprüche**

1. Behälter zum Warmhalten von Speisen, vorzugsweise in Kantinen-oder Ladentheken einbaubarer Behälter aus Chrom-Nickel-Stahl, insbesondere Behälter mit einem Außengefäß, einer das Außengefäß beheizenden Heizeinrichtung und mit einem in das Außengefäß einsetzbaren Einsatzgefäß zur Aufnahme der Speisen,
dadurch gekennzeichnet,
daß als Heizeinrichtung ein an der Außenseite des Außengefäßes (3) befindliches elektrisches Widerstandsheizelement vorgesehen ist.

2. Behälter nach Anspruch 1, dadurch gekennzeichnet, daß das Widerstandsheizelement eine an der Außenseite des Bodens des Außengefäßes (3) angeordnete, an sich bekannte Elektro-Heizplatte - (9) ist.

3. Behälter nach Anspruch 2, dadurch gekennzeichnet, daß die Heizplatte (9) eine Temperatursteuereinrichtung aufweist.

4. Behälter nach einem der vorhergehenden Ansprüche, dadurch gekennzeichnet, daß an dem Boden des Außengefäßes (3) außen eine Lage aus einem Werkstoff mit relativ hoher Wärmeleitzahl angeordnet ist und daß die Heizplatte (9) an der Lage mit wärmeleitendem Kontakt anliegt.

5. Behälter nach Anspruch 4, dadurch gekennzeichnet, daß die Lage eine Platte (10) aus Aluminium ist.

6. Behälter nach Anspruch 5, dadurch gekennzeichnet, daß die Platte (10) Dehnungsfugen (16) aufweist.

7. Behälter nach Anspruch 6, dadurch gekennzeichnet, daß die Dehnungsfugen (16) in der dem Boden des Außengefäßes (3) abgewandten Oberfläche der Platte (10) angeordnete Rillen sind.

8. Behälter nach einem der Ansprüche 5 bis 7, dadurch gekennzeichnet, daß die Platte (10) mit Hilfe von Befestigungselementen an dem Boden des Außengefäßes (3) befestigt ist, die in der Platte (10) angeordnete Durchbrechungen (12) mit Spiel durchgreifen.

9. Behälter nach Anspruch 8, dadurch gekennzeichnet, daß die Befestigungselemente von dem Boden des Außengefäßes (3) etwa senkrecht vorstehende Bolzen (11) sind und daß die Platte (10) an jedem Bolzen (11) mit wenigstens einem die dem jeweiligen Bolzen (11) zugeordnete Durchbrechung (12) an der dem Außengefäß (3) abgewandten Seite überdeckenden, an dem freien Ende des Bolzens (11) angesetzten Halteelement gehalten ist.

10. Behälter nach Anspruch 9, dadurch gekennzeichnet, daß jeder Bolzen (11) an seinem freien Ende ein Gewinde (17) aufweist und daß als Halteelement für einen Bolzen (11) jeweils ein Federring (13) und eine auf das Gewinde (17) aufschraubbare Mutter (14) vorgesehen sind.

Fig.1

Fig.2

Fig.3

9793